(19) Europäisches Patentamt
European Patent Office
Office européen des brevets

(11) Publication number: **0 237 135 B1**

(12) **EUROPEAN PATENT SPECIFICATION**

(45) Date of publication of patent specification: **25.11.92**

(51) Int. Cl.$^5$: **C08K 5/53**

(21) Application number: **87200473.4**

(22) Date of filing: **13.03.87**

(54) **Thermally stable diphosphonate-type flame retardant additive for plastics.**

(30) Priority: **14.03.86 US 839479**

(43) Date of publication of application:
**16.09.87 Bulletin 87/38**

(45) Publication of the grant of the patent:
**25.11.92 Bulletin 92/48**

(84) Designated Contracting States:
**BE DE ES FR GB IT NL SE**

(56) References cited:
**WO-A-80/01697**
**FR-A- 2 376 180**

(73) Proprietor: **AKZO N.V.**
**Velperweg 76**
**NL-6824 BM Arnhem(NL)**

(72) Inventor: **Weil, Edward David**
**6 Amherst Drive**
**Hastings-on-Hudson New York 10706(US)**
Inventor: **Tomko, John**
**200 Beacon Hill Drive**
**Dobbs Ferry New York 10522(US)**

(74) Representative: **Schalkwijk, Pieter Cornelis et al**
**Akzo Patents Department P.O. Box 93 00**
**Velperweg 76**
**NL-6800 SB Arnhem(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 237 135 B1

## Description

The present invention relates to novel flame retardant plastic compositions. This invention also teaches a novel method of making a flame retardant composition.

Polymers as a class of materials are generally flammable. Considerable attention has been given the development of materials for incorporation into polymers to render them flame retardant.

A wide variety of phosphorus and halogen containing compounds have been shown in the prior art to impart flame retardancy to polymers, however, there are usually problems attendant the use of these materials. One source of difficulty for the incorporation of flame retardants relates to modern methods of hot milling polymer compositions. In hot milling techniques the polymer is extruded with a heated screw mechanism, typically at temperatures above 210°C and often as high as 390°C. Under these high temperature conditions both thermosetting and thermoplastic materials become workable and permit uniform inclusion of additional agents such as flame retardants. Unfortunately, flame retardants often participate in decomposition or side reactions which impart undesirable odor or color to the base polymer being processed. Other flame retardants become somewhat volatile under processing conditions and are not effectably retained during processing.

It is desirable to develop new flame retardants agents which are thermally stable, essentially non-volatile, and adaptable to high temperature milling technology.

According to the present invention, improved polymeric compositions are prepared by incorporating therein a flame retardant effective amount of a tetraaryl alkylene diphosphonate flame retardant according to claim 1.

This invention is also a process for preparing improved flame retardant polymers wherein the improvement comprises incorporating into the polymer the flame retardant of this invention according to claim 11.

### The Flame Retardant Component

The tetraaryl alkylene diphosphonates used as flame retardants in this invention may be prepared by transesterification/Arbuzov rearrangement. These rearrangement reactions and transesterifications are described in DE-B-2,167,077 wherein triphenylphosphite reacts with an alkanediol in the presence of metallic sodium.

The compound tetraphenylethane-1,2-diphosphonate is described by Kabachnik, Izv. Akad. Nauk SSR 1947 p. 631.

The general formula of the flame retardant used in the composition and method of this invention is

$$(ArO)_2\overset{O}{\overset{\|}{P}}\text{-Alkylene-}\overset{O}{\overset{\|}{P}}\text{-}(O\text{-}Ar)_2$$

wherein Ar is an aryl group or alkyl-substituted aryl group or polyalkyl-substituted aryl group of 6 to 30 carbon atoms and alkylene is an alkylene bridging group of from 2 to 12 carbon atoms.

Preferably Ar is an aryl group selected from phenyl, methylphenyl, dimethylphenyl, ethylphenyl, isopropylphenyl, tertiary butylphenyl or mixtures thereof. The Ar groups in the tetraaryl alkylene diphosphonate molecule may be the same or different, if desired.

The alkylene bridging group between the two phosphonate radicals has the general formula ($C_nH_{2n}$) and is preferably 2, 3 or 4 carbon atoms.

The most preferred flame retardant of the invention is tetraphenylethane-1,2-diphosphonate. A suitable preparation method for preparing this compound is to mix 1 mole of alkylene glycol with 2 moles of triaryl phosphite optionally in the presence of a catalyst such as 1/4 wt. % methyl iodide for a period of hours at temperature in excess of 150°C. Typically, the reaction mixture may be distillatively stripped at 160° or more to remove phenol or alkyl phenols. The residual product (distillant) may be recrystallized from alcohol (e.g., butanol) to give a colorless product with a melting point of about 151°C.

### The Polymeric Component of the Composition

The products of this invention can be used to flame retard polymers in general. Some specific polymers

which can be flame retarded by the flame retardant described above include polypropylene, polyethylene, polypropylene copolymers, rubber, both natural and synthetic, polystyrene, acrylics, styrene copolymers such as acrylonitrile, butadiene styrene (ABS), and vinyl polymers such as polyvinyl chloride (PVC), polyesters such as polyethylene terephthalate or polybutylene terephthalate, polyphenylene oxides, nylons, and polyethers. Particularly preferred polymers for use in the composition of the invention are polyethylene terephthalate and polyamides.

## The Composition Components

The tetraaryl alkylene diphosphonates of the invention may be used as substantially the sole flame retardant in the composition. If desired, a mixture of tetraaryl alkylene diphosphonates may be used.

The compositions of the invention contain a flame retardant effective amount of tetraaryl alkylene diphosphonate flame retardant. A flame retardant effective amount of the diphosphonate flame retardant may be determined by preparing samples of flame retarded polymer and subjecting them to one or more flame retardancy tests (e.g., Underwriter's Laboratories Inc. "UL-94"; Standard Testing for Flammability of Plastic Materials for Parts in Devices & Appliances) until acceptable characteristics are obtained. Typically, from about 1 to 20 weight percent of the tetraaryl alkylene diphosphonate in plastic composition will impart acceptable flame retardancy.

Optionally, the flame retardant of this invention may be used in combination with other known flame retardants, particularly, organic bromine or phosphorus compounds having known flame retardant utility. Nevertheless, the benefits arising from the presence of the flame retardants of this invention generally require that approximately at least one half of the flame retardant content of desired flame retardant formulation originate from the inclusion of the tetraaryl alkylene diphosphonate. Examples of flame retardants and smoke suppressants which may be included in formulations of this invention are decabromodiphenyl oxide, bis(pentabromophenoxy)ethane, polybrominated polystyrene, bis-(tetrabromophthalamido)ethane, tetrabromobisphenol-A, hexabromocyclododecane, bis(tribromophenoxy)-ethane, octabromodiphenyl oxide, molybdenum oxide and molybdates, zinc oxide and zinc salts, magnesium oxide and carbonate, antimony oxides, and alumina trihydrate.

## Preparation of the Composition

The flame retardant is incorporated into the polymer by a variety of mixing techniques. One technique is to granularize the polymer and flame retardant, mix these materials, and feed them to a hot mill extruder which melts the polymer and uniformly distributes the flame retardant throughout the molten polymer mass. Alternatively, the flame retardant can be added to the polymer during the process of hot mill extrusion, for example, through a feed port incorporated into the milling apparatus.

The process of the invention is illustrated in the following Example.

## EXAMPLE

Part A.

Preparation of Flame Retardant Additive General Reaction:

$$2\ (\text{Phenyl-O})_3\text{P} + \text{HO-CH}_2\text{-CH}_2\text{-OH} \xrightarrow{\text{CH}_3\text{I}}$$

$$(\text{Phenyl-O})_2\overset{\text{O}}{\overset{\|}{\text{P}}}\text{-CH}_2\text{-CH}_2\text{-}\overset{\text{O}}{\overset{\|}{\text{P}}}(\text{O-Phenyl})_2$$

Synthesis of Tetraphenyl Ethane-1,2-diphosphonate by Transesterification/Arbuzov rearrangement

1 mole of ethylene glycol is added at 215 - 235° C to 2 moles triphenyl phosphite, with about 0.25% by weight methyl iodide as catalyst over about 15 hours. The reaction mixture is stripped at 160°C at 10

min. to remove phenol and the residual product recrystallized from butanol to give the product as colorless crystals mp. 151 ° C.

The stability of the compound is shown by thermogravimetric analysis to have little decomposition up to about 340 ° C.

Part B:

Preparation of a Flame Retardant Composition according to the Invention.

Fifteen parts of tetraphenyl ethane-1,2-diphosphonate was uniformly mixed with 100 parts of molten poly(ethylene terephthalate) at about 290 ° C. The molten polymer-flame retardant mixture was drawn into a plastic tube having a glass fiber wick. Upon cooling the tube was cut away to give a rod of approximately 6 mm. diameter and 200 mm. length. These rods were used for flammability testing. These rods were found to be perfectly white with no sign of discoloration. They were self-extinguishing when ignited in air in any position, including bottom ignition in the vertical position.

Part C

Preparation of a Flame Retardant Composition - A Comparative Experiment.

The composition and testing method of Part B was employed, excepting sulfonylbisphenol phenylphosphonate oligomer (a commercial flame retardant) was used. The test produced a gray discoloration in the test rods.

## Claims

1. A flame retardant plastic composition comprising a polymer in admixture with a flame retardant effective amount of a flame retardant represented by the formula:

$$(ArO)_2\overset{\displaystyle O}{\overset{\|}{P}}\text{-Alkylene-}\overset{\displaystyle O}{\overset{\|}{P}}\text{-}(OAr)_2$$

where Ar is aryl, alkyl-substituted aryl, or polyalkyl-substituted aryl and Alkylene is a bridging group of from 2 to 12 carbon atoms.

2. The composition of Claim 1 wherein the flame retardant is tetraphenyl ethane-1,2-diphosphonate.

3. The composition of Claim 1 wherein the polymer is a thermoplastic polymer.

4. The composition of Claim 1 wherein the polymer is a thermosetting polymer.

5. The composition of Claim 3 wherein the polymer is a polyamide.

6. The composition of Claim 4 wherein the polymer is a polyethylene terephthalate.

7. The composition of Claim 1 wherein the flame retardant is from 1 to 20 weight percent of the composition.

8. The composition of Claim 2 wherein the flame retardant is from 1 to 20 weight percent of the composition.

9. The composition of Claim 1 wherein the group Ar is selected from phenyl, dimethylphenyl, methylphenyl, ethylphenyl, isopropylphenyl, tertiarybutylphenyl, or mixtures thereof.

10. The composition of Claim 1 wherein the alkylene bridging group has 2 to 6 carbon atoms.

**11.** A method of making a flame retardant polymer by hot milling with the polymer a flame retardant effective amount of a flame retardant represented by the formula:

$$(ArO)_2\overset{\overset{O}{\|}}{P}\text{-Alkylene-}\overset{\overset{O}{\|}}{P}\text{-}(OAr)_2$$

wherein Ar is aryl, alkyl-substituted aryl, and polyalkyl-substituted aryl, and Alkylene is a bridging group of from 2 to 12 carbon atoms.

**12.** The process of Claim 11 wherein the flame retardant is tetraphenyl ethane-1,2-diphosphonate.

**13.** The process of Claim 11 wherein the hot milling is performed at a temperature in the range of from 210° to 390°C.

**14.** The process of Claim 11 wherein the polymer is a thermoplastic polymer.

**15.** The process of Claim 11 wherein the polymer is a thermosetting polymer.

**16.** The process of Claim 11 wherein the polymer is a polyamide.

**17.** The process of Claim 11 wherein the polymer is a polyethylene terephthalate.

**Patentansprüche**

**1.** Flammhemmende Kunststoffzubereitung, enthaltend ein Polymer in Mischung mit einer flammhemmmend wirksamen Menge eines flammhemmenden Mittels entsprechend der Formel:

$$(ArO)_2\overset{\overset{O}{\|}}{P}\text{-Alkylen-}\overset{\overset{O}{\|}}{P}\text{-}(OAr)_2$$

worin Ar Aryl, alkylsubstituiertes Aryl oder polyalkylsubstituiertes Aryl und Alkylen eine Brückengruppe mit 2 bis 12 Kohlenstoffatomen ist.

**2.** Zubereitung nach Anspruch 1, in der das flammhemmende Mittel Tetraphenylethan-1,2-diphosphonat ist.

**3.** Zubereitung nach Anspruch 1, in der das Polymer ein thermoplastisches Polymer ist.

**4.** Zubereitung nach Anspruch 1, in der das Polymer ein duroplastisches Polymer ist.

**5.** Zubereitung nach Anspruch 3, in der das Polymer ein Polyamid ist.

**6.** Zubereitung nach Anspruch 4, in der das Polymer ein Polyethylenterephthalat ist.

**7.** Zubereitung nach Anspruch 1, in der das flammhemmende Mittel 1 bis 20% des Gewichts der Zubereitung ausmacht.

**8.** Zubereitung nach Anspruch 2, in der das flammhemmende Mittel 1 bis 20% des Gewichts der Zubereitung ausmacht.

**9.** Zubereitung nach Anspruch 1, in der die Gruppe Ar gewählt ist aus Phenyl, Dimethylphenyl, Methylphenyl, Ethylphenyl, Isopropylphenyl, tert.-Butylphenyl oder Mischungen hiervon.

**10.** Zubereitung nach Anspruch 1, in der die Alkylen-Brükkengruppe 2 bis 6 Kohlenstoffatome hat.

**11.** Verfahren zur Herstellung eines flammhemmenden Polymers durch Heisswalzen des Polymers mit einer flammhemmend wirksamen Menge eines flammhemmenden Mittels entsprechend der Formel:

$$(ArO)_2\overset{\overset{O}{\|}}{P}\text{-Alkylen-}\overset{\overset{O}{\|}}{P}\text{-}(OAr)_2$$

worin Ar Aryl, alkylsubstituiertes Aryl oder polyalkylsubstituiertes Aryl und Alkylen eine Brückengruppe mit 2 bis 12 Kohlenstoffatomen ist.

**12.** Verfahren nach Anspruch 11, in dem das flammhemmende Mittel Tetraphenylethan-1,2-diphosphonat ist.

**13.** Verfahren nach Anspruch 11, in dem das Heisswalzen bei einer Temperatur im Bereich von 210° bis 390°C durchgeführt wird.

**14.** Verfahren nach Anspruch 11, in dem das Polymer ein thermoplastisches Polymer ist.

**15.** Verfahren nach Anspruch 11, in dem das Polymer ein duroplastisches Polymer ist.

**16.** Verfahren nach Anspruch 11, in dem das Polymer ein Polyamid ist.

**17.** Verfahren nach Anspruch 11, in dem das Polymer ein Polyethylenterephthalat ist.

**Revendications**

**1.** Les compositions de matière plastique présentant un caractère retardateur de l'inflammation comprenant un polymère mélangé à une quantité efficace pour retarder l'inflammation d'un agent retardateur de flamme présentant la formule :

$$(ArO)_2\overset{\overset{O}{\|}}{P}\text{-alkylène-}\overset{\overset{O}{\|}}{P}\text{-}(OAr)_2$$

dans laquelle Ar est un radical aryle, aryle à substitution alkyle ou aryle à substitution polyalkyle et alkylène est un groupe de pontage contenant de 2 à 12 atomes de carbone.

**2.** La composition selon la revendication 1, dans laquelle l'agent retardateur de flamme est un tétraphényléthane-1,2-diphosphonate.

**3.** La composition selon la revendication 1, dans laquelle le polymère est un polymère thermoplastique.

**4.** La composition selon la revendication 1, dans laquelle le polymère est un polymère thermodurcissant.

**5.** La composition selon la revendication 3, dans laquelle le polymère est une polyamide.

**6.** La composition selon la revendication 4, dans laquelle le polymère est un polyéthylène téréphtalate.

**7.** La composition selon la revendication 1, dans laquelle l'agent retardateur de flamme forme de 1 à 20 pourcent en poids de la composition.

**8.** La composition selon la revendication 2, dans laquelle l'agent retardateur de flamme forme de 1 à 20 pourcent en poids de la composition.

**9.** La composition selon la revendication 1, dans laquelle le groupe Ar est choisi dans le groupe comprenant les radicaux phényle, diméthylphényle, méthylphényle, éthylphényle, isopropylphényle, tertiobutylphényle, ou leurs mélanges.

**10.** La composition selon la revendication 1, dans laquelle le groupe de pontage alkylène comporte de 2 à 6 atomes de carbone.

**11.** Un procédé de fabrication d'un polymère présentant un caractère retardateur de l'inflammation par broyage à chaud avec le polymère mélangé à une quantité efficace pour retarder l'inflammation d'un agent retardateur de flamme présentant la formule :

$$(ArO)_2\overset{O}{\overset{\|}{P}}\text{-alkylène-}\overset{O}{\overset{\|}{P}}\text{-}(OAr)_2$$

dans laquelle Ar est un radical aryle, aryle à substitution alkyle ou aryle à substitution polyalkyle et alkylène est un groupe de pontage contenant de 2 à 12 atomes de carbone.

**12.** Un procédé selon la revendication 11 dans lequel l'agent retardateur de flamme est le tétraphényl-éthane-1,2-diphosphonate.

**13.** Un procédé selon la revendication 11, dans lequel le broyage à chaud est effectué à une température comprise entre 210 ° C et 390 ° C.

**14.** Un procédé selon la revendication 11, dans lequel le polymère est un polymère thermoplastique.

**15.** Un procédé selon la revendication 11, dans lequel le polymère est un polymère thermodurcisseur.

**16.** Un procédé selon la revendication 11, dans lequel le polymère est une polyamide.

**17.** Un procédé selon la revendication 11, dans lequel le polymère est un polyéthylène téréphtalate.